# EUROPÄISCHE PATENTSCHRIFT

(11) **EP 4 124 395 B1**
(45) Veröffentlichungstag und Bekanntmachung des Hinweises auf die Patenterteilung: **13.11.2024**
(21) Anmeldenummer: 21188822.7
(22) Anmeldetag: 30.07.2021
(51) Int. Cl.: B09B 3/00

(54) **VERFAHREN ZUR ZERSTÖRUNG FASERARTIGER STRUKTUREN**
METHOD FOR DESTROYING FIBROUS STRUCTURES
PROCÉDÉ DE DESTRUCTION DES STRUCTURES FIBREUSES

(43) Veröffentlichungstag der Anmeldung: 01.02.2023
(73) Patentinhaber: DESABAU GmbH, 35688 Dillenburg-Oberscheld (DE)
(72) Erfinder: Deusing, Ralf, 35688 Dillenburg (DE); Deusing, Stefan, 35688 Dillenburg-Oberscheld (DE)
(74) Vertreter: Gille Hrabal Partnerschaftsgesellschaft mbB Patentanwälte

(56) Entgegenhaltungen:
- EP-A2- 0 568 367

## Beschreibung

Die vorliegende Erfindung betrifft ein Verfahren zur Zerstörung von faserartigen Strukturen bei Mineralwolle. Insbesondere betrifft die vorliegende Erfindung ein Verfahren zur Zerstörung von faserartigen Strukturen bei Mineralwolle, bei welchem diejenigen Fasern zerstört werden, die gesundheitsgefährden und/oder umweltschädigend sind, während die übrigen Faserstrukturen im Wesentlichen aufrechterhalten werden.

Mineralwolle bezeichnet einen weichen Werkstoff aus künstlich hergestellten mineralischen Fasern. Je nach Ausgangsmaterial unterscheidet man Schlackenwolle, Glaswolle und Steinwolle.

Die Mineralwolle-Arten Steinwolle und Glaswolle bestehen aus künstlichen Mineralfasern (KMF) und dominieren im Bauwesen als Dämmmaterialien. Nach der EU-Richtlinie 97/69/EG bestehen KMF aus ungerichteten, glasigen (Silikat-)Fasern mit einem Massengehalt von über 18 Prozent an Oxiden von Natrium, Kalium, Kalzium, Magnesium und Barium. Es wird dabei zwischen "alter" und "neuer" Mineralwolle unterschieden. Der Begriff "alte Mineralwolle" umschreibt die Einstufung der Fasern als krebserzeugend, der Begriff "neue Mineralwolle" die Einstufung der Fasern als nicht krebserzeugend. Mineralwolle wird durch Aufschmelzen der Ausgangsmaterialien und Zerfaserung unter Zugabe von Bindemitteln hergestellt. Häufig wird Mineralwolle in Kombination mit Kaschierungen oder Bewehrungen eingesetzt.

Mineralwolle wird vorwiegend als nichtbrennbarer Dämmstoff für die Wärmedämmung von Häusern eingesetzt. In der Industrie wird sie insbesondere als Schall- und Brandschutz verwendet, z. B. zum Einhüllen von Tanks, Behältern, Heizkesseln und Turbinen. Mineralwolle wird meist als Vliesstoff hergestellt oder in stärkerer Verdichtung als Platten. Darüber hinaus wird Steinwolle auch als erdeloses Substrat zur Hydrokultur im industriellen Gemüse- und Zierpflanzenanbau eingesetzt.

Üblicherweise wird Abfall von Mineralwolle auf einer Deponie endgelagert. Wegen der geringen Schüttdichte von üblicherweise weniger als 100 kg/m³ nimmt die Alt-Mineralwolle ein unverhältnismäßig hohes Volumen ein, weshalb die Deponierung mit hohen Kosten verbunden ist.

Die groben Fasern der Mineralwolle, welche üblicherweise dicker als 3 µm sind, führen bei Hautkontakt zu Hautreizungen und bei den meisten Menschen zu Juckreiz. Empfindliche Haut kann stärker reagieren, mit Rötung, Schwellung und Ähnlichem.

Die gesundheitliche und arbeitsschutzrechtliche Bewertung von künstlichen Mineralfasern (KMF), zu denen auch Glas- und Steinwollfasern gehören, ist in der Technischen Regel für Gefahrstoffe (TRGS 521) oder in der Gefahrstoffverordnung (GefStoffV) geregelt. Besondere Vorsicht ist dabei vor allem bei älteren Gebäuden geboten, bei denen Mineralwolle aus den Jahren vor 1995 beziehungsweise 2000 verwendet wurde. Denn bis zu dieser Zeit war Mineralwolle erhältlich, deren Fasern eine Länge von mehr als 5 µm und einen Durchmesser unter 3 µm aufweisen (Verhältnis von Länge zu Breite ist größer als 3:1). Da Fasern von dieser geringen Größe grundsätzlich als lungengängig gelten, gilt Mineralwolle aus dieser Zeit als "potenziell krebserregend" und ist folglich von der Gesundheitsgefahr vergleichbar mit dem Baustoff Asbest. Insbesondere bei alter Mineralwolle sind daher besondere Vorsichtsmaßnahmen zu ergreifen. Diese gesundheitspolitischen Fasern werden auch als WHO-Fasern bezeichnet.

Da WHO-Fasern aus verschiedenen Stoffen bestehen können, stehen manche davon im Verdacht, Lungenkrebs auslösen zu können. Insbesondere WHO-Fasern aus Asbest, Glaswolle, Hochtemperaturwolle, Steinwolle und Schlacken oder Keramik gelten als potenzielle Gefahr für die Lungen.

In EP 0568367 A2 wird ein Verfahren zur Behandlung von Industrieabfällen aus Asbest beschrieben. Das Verfahren umfasst die Behandlung von Asbestabfällen durch Herstellung von Pellets, die Asbestrückstände, Glas, ein von Alkalimetallchloriden verschiedenes Alkalimetallsalz und ein Eisensalz enthalten, und Erhitzen der Pellets auf eine Temperatur von 800 bis 1200 °C.

Während der Entsorgung von fasern-enthaltenden Rückständen muss insbesondere darauf geachtet werden, dass diese WHO-Fasern während der Entsorgungsbehandlung zerstört werden. Im Rahmen der vorliegenden Erfindung wird dabei unter einer Zerstörung von WHO-Fasern verstanden, dass die Fasern nach ihrer Behandlung kein Aspektverhältnis von Länge zu Breite von größer als 3:1 aufweisen. Insbesondere wird im Rahmen der vorliegenden Erfindung unter einer Zerstörung von WHO-Fasern verstanden, dass
a) die Fasern nach ihrer Behandlung keinen Durchmesser von weniger als 3 µm aufweisen oder
b) die Fasern nach ihrer Behandlung keine Länge von mehr als 5 µm aufweisen oder
c) die Fasern nach ihrer Behandlung gleichzeitig keinen Durchmesser von weniger als 3 µm und keine Länge von mehr als 5 µm aufweisen.

Aus P. Kinnunen, J. Yliniemi, B. Talling, M. Illikainen, Rockwool waste in fly ash geopolymer composites, J. Mater. Cycles Waste Manag. 19 (2017) 1220 bis 1227 sowie alkali-activated material precursor, Mater. Basel Switz. 9 (2016) ist bekannt, dass man Steinwolle mit einer Natriumaluminatlösung unter Bildung eines röntgenamorphen Gel umsetzten kann, wobei eine teilweise dehydratisierte basische Hydrosodalitphase (Na₈(Al-SiO₄)₆(OH)₂ · 4 H₂O) und eine teilweise entwässerte Quintinitphase (Mg₄Al₂)(OH)₁₂CO₃(H₂O)₃)_{0,5} (Teil der Hydrotalcit-Gruppe der geschichteten Doppelhydroxiden (LDH)). Im Gegensatz dazu wurde bei der Reaktion von Glaswolle mit einer Natriumaluminatlösung eine dehydrierte Sodalithphase (Na₆(AlSiO₄)₆) und ein röntgenamorphes Gel identifiziert, wobei die Abwesenheit der LDH-Phase aus der Hydrotalcitgruppe, die auf den weitaus geringeren MgO-Gehalt in Glaswolle zurückzuführen ist. Alkalisch aktivierter Stein- und Glaswolle wiesen nach 28 Tagen Aushärtung Druckfestigkeiten von 30 MPa bzw. 49 MPa auf.

Verfahren zur gezielten Zerstörung von sogenannten WHO-Fasern, die im Verbund mit Fasern vorliegen, die die WHO-Spezifikation nicht aufweisen, wobei faserartige Strukturen, welche die Spezifikation von WHO-Fasern nicht aufweisen, beibehalten werden, sind bisher unbekannt.

Eine Aufgabenstellung der vorliegenden Erfindung ist somit, ein Verfahren zur Zerstörung von Faser-enthaltenden Rückständen bereitzustellen, mit welchen WHO-Fasern, also Fasern mit einem Aspektverhältnis von größer als 3:1, gezielt und effizient in unschädliche Strukturen umgewandelt werden können.

Eine weitere Aufgabenstellung der vorliegenden Erfindung ist, ein Verfahren zur Zerstörung von Faser-enthaltenden Rückständen bereitzustellen, mit welchen WHO-Fasern, also Fasern mit einer Länge von mehr als 5 µm, gezielt und effizient in unschädliche Strukturen umgewandelt werden können.

Eine weitere Aufgabenstellung der vorliegenden Erfindung ist, ein Verfahren zur Zerstörung von Faser-enthaltenden Rückständen bereitzustellen, mit welchen WHO-Fasern, also Phasen mit einem Durchmesser von weniger als 3 µm, gezielt effizient in unschädliche Strukturen umgewandelt werden können.

Eine weitere Aufgabenstellung der vorliegenden Erfindung ist, ein Verfahren zur Zerstörung von Faser- enthaltenden Rückständen bereitzustellen, mit welchen WHO-Fasern, also Phasen mit einer Länge von mehr als 5 µm und einem Durchmesser von weniger als 3 µm, gezielt und effizient in unschädliche Strukturen umgewandelt werden können.

Eine weitere Aufgabenstellung der vorliegenden Erfindung ist die Bereitstellung eines Verfahrens zur Zerstörung von Faser-enthaltenden Rückständen, bei welchem die Faserstruktur von Fasern, die ein Aspektverhältnis außerhalb der WHO-Fasern aufweisen, im Wesentlichen beibehalten wird, während WHO-Fasern gezielt und effizient in unschädliche Strukturen umgewandelt werden können. Im Rahmen der vorliegenden Erfindung wird unter "im Wesentlichen beibehalten" verstanden, dass nach der Durchführung des erfindungsgemäßen Verfahrens faserartige Strukturen mit Aspektverhältnissen außerhalb der WHO-Fasern in einem Rasterelektronenmikroskop noch erkennbar sind.

Gelöst werden diese Aufgabenstellungen durch ein Verfahren zur Zerstörung von Faser- enthaltenden Rückständen, welches durch die nachfolgenden Verfahrensschritte gekennzeichnet ist:
(i) Bereitstellung von einem Faser-enthaltenden Material, welches WHO-Fasern mit einem Aspektverhältnis von Länge zu Durchmesser von mehr als 3 : 1 enthält; und
(ii) Umsetzung des aus Verfahrensschritt (i) resultierenden Faser-enthaltenden Materials mit einem Wasserglas.

Das erfindungsgemäße Verfahren ist dadurch gekennzeichnet, dass das molare Modul SiO₂/M₂O des Wasserglases (Molarität) vorzugsweise kleiner als 3,35 ist, wobei M₂O die Gesamtmenge an Oxiden von Alkalimetallen M bezeichnet.

Erfindungsgemäß wurde herausgefunden, dass durch die Einstellung der Molarität in dem zuvor beschriebenen Bereich es ausschließlich zu einer Zersetzung der WHO-Fasern kommt, während zeitgleich die übrigen Faserstrukturen im Wesentlichen beibehalten werden.

Im Rahmen der vorliegenden Erfindung wird unter einer Zersetzung der WHO-Fasern nicht zwingend verstanden, dass sich die faserhaltigen Strukturen der WHO-Fasern auflösen, sondern insbesondere, dass sich diese faserartigen Strukturen der WHO-Fasern sich an größeren Fasern anheften oder sogar mit größeren Fasern Verbundstoffe im Sinne von Faserknäueln bilden, wodurch die WHO-Fasern ihr gesundheitsgefährdendes Potenzial verlieren.

Daher betrifft die vorliegende Erfindung insbesondere ein Verfahren zum Unschädlichmachen von WHO-Fasern in Faser-enthaltenden Rückständen, welches durch die nachfolgenden Verfahrensschritte gekennzeichnet ist:
(i) Bereitstellung von einem Faser-enthaltenden Material, welches WHO-Fasern mit einem Aspektverhältnis von Länge zu Durchmesser von mehr als 3 : 1 enthält; und
(ii) Umsetzung des aus Verfahrensschritt (i) resultierenden Faser-enthaltenden Materials mit einem Wasserglas,
wobei das erfindungsgemäße Verfahren dadurch gekennzeichnet, dass das molare Modul SiO₂/M₂O des Wasserglases (Molarität) vorzugsweise kleiner als 3,35 ist, wobei M₂O die Gesamtmenge an Oxiden von Alkalimetallen M bezeichnet.

Es hat sich erfindungsgemäß herausgestellt, dass unter Verwendung der vorstehenden Molaritäten des Wasserglases es möglich ist, gezielt die WHO-Fasern in dem zu behandelnden Material dergestalt zu bearbeiten, dass sich die WHO-Fasern an längere Fasern oder breitere Fasern anlagern (anagglomerieren) und dadurch unter Gesundheitsaspekten unschädlich gemacht werden.

In weiteren Ausführungsformen des erfindungsgemäßen Verfahrens beträgt die Molarität von SiO₂ zu M₂O in dem verwendeten Wasserglas weniger als 3,30, insbesondere weniger als 3,20, insbesondere weniger als 3,10, insbesondere weniger als 3,00, insbesondere weniger als 2,90, insbesondere weniger als 2,80, insbesondere weniger als 2,70, insbesondere weniger als 2,60, insbesondere weniger als 2,50, insbesondere weniger als 2,40, insbesondere weniger als 2,30, insbesondere weniger als 2,20, insbesondere weniger als 2,10, insbesondere weniger als 2,00, insbesondere weniger als 1,90, insbesondere weniger als 1,80, insbesondere weniger als 1,70, insbesondere weniger als 1,60, insbesondere weniger als 1,50, insbesondere weniger als 1,40, insbesondere weniger als 1,30, insbesondere weniger als 1,20, insbesondere weniger als 1,10, insbesondere weniger als 1,00.

Unter dem Begriff "Wasserglas" werden im Rahmen der vorliegenden Erfindung Alkalimetallsilikate verstanden, die z.B. durch Zusammen schmelzen von Quarzsand mit Natriumcarbonat oder Kaliumcarbonat bei 1400 °C bis 1500 °C, oder durch hydrothermale Verfahren erhältlich sind. Diese Alkalimetallsilikate sind typischerweise wasserlöslich.

Das erfindungsgemäß einzusetzende Wasserglas enthält bevorzugt Kationen eines oder mehrerer Alkalimetalle aus der Gruppe bestehend aus Lithium, Natrium und Kalium, so dass das Wasserglas vorzugsweise ausgewählt wird aus der Gruppe, bestehend aus Natrium-, Kalium-, Lithiumwasserglas und beliebigen Mischungen hiervon.

Das erfindungsgemäße Verfahren, d. h. die Umsetzung des aus Verfahrensschritt (i) resultierenden Faser-enthaltenden Materials im Verfahrensschritt (ii), wird vorzugsweise bei einer Temperatur oberhalb von Raumtemperatur, d. h. unter Erwärmung, durchgeführt.

Geeignete Temperaturen für die Durchführung des Verfahrensschritte (ii) sind Temperaturen oberhalb von 30 °C, insbesondere Temperaturen oberhalb von 40 °C, insbesondere Temperaturen oberhalb von 50 °C, insbesondere Temperaturen oberhalb von 60 °C, insbesondere Temperaturen oberhalb von 70 °C, insbesondere Temperaturen oberhalb von 80 °C, insbesondere Temperaturen oberhalb von 90 °C, insbesondere Temperaturen oberhalb von 100 °C, insbesondere Temperaturen oberhalb von 110 °C, insbesondere Temperaturen oberhalb von 120 °C, insbesondere Temperaturen oberhalb von 130 °C, insbesondere Temperaturen oberhalb von 130 °C, insbesondere Temperaturen oberhalb von 140 °C, insbesondere Temperaturen oberhalb von 150 °C, insbesondere Temperaturen oberhalb von 160 °C, insbesondere Temperaturen oberhalb von 170 °C, insbesondere Temperaturen oberhalb von 180 °C, insbesondere Temperaturen oberhalb von 190 °C, insbesondere Temperaturen oberhalb von 200 °C.

Das erfindungsgemäße Verfahren, d. h. die Umsetzung des aus Verfahrensschritt (i) resultierenden Faser-enthaltenden Materials im Verfahrensschritt (ii), wird vorzugsweise unter Einwirkung von einer Drehung der Zusammensetzung aus Faser-enthaltenden Material und Wasserglas durchgeführt.

Im Rahmen der vorliegenden Erfindung wird die Drehbewegung im Verfahrensschritt (ii) im Allgemeinen für einen Zeitraum von mindestens 5 Minuten, insbesondere mindestens 10 Minuten, insbesondere mindestens 15 Minuten, insbesondere mindestens 20 Minuten, insbesondere mindestens 25 Minuten, insbesondere mindestens 30 Minuten, insbesondere mindestens 35 Minuten, insbesondere mindestens 40 Minuten, insbesondere mindestens 45 Minuten, insbesondere mindestens 50 Minuten, insbesondere mindestens 55 Minuten, insbesondere mindestens 60 Minuten, insbesondere mindestens 70 Minuten, insbesondere mindestens 80 Minuten, insbesondere mindestens 90 Minuten, durchgeführt.

Im Rahmen der vorliegenden Erfindung wird die Drehbewegung im Verfahrensschritt (ii) im Allgemeinen für einen Zeitraum von höchstens 120 Minuten, insbesondere höchstens 115 Minuten, insbesondere höchstens 110 Minuten, insbesondere höchstens 105 Minuten, insbesondere höchstens 100 Minuten, insbesondere höchstens 95 Minuten, insbesondere höchstens 90 Minuten, insbesondere höchstens 85 Minuten, insbesondere höchstens 80 Minuten, insbesondere höchstens 75 Minuten, insbesondere höchstens 70 Minuten, insbesondere höchstens 65 Minuten, insbesondere höchstens 60 Minuten, insbesondere höchstens 55 Minuten, insbesondere höchstens 50 Minuten, insbesondere höchstens 45 Minuten, insbesondere höchstens 40 Minuten, insbesondere höchstens 35 Minuten, insbesondere höchstens 30 Minuten, durchgeführt.

Im Rahmen der vorliegenden Erfindung kann die Drehbewegung zu Druck-, Schlag-, Reibungs-, Prall- und Scherkräfte führen, die auf das Faser-enthaltenden Material einwirken.

Es hat sich somit erfindungsgemäß herausgestellt, dass eine Verkleinerung von WHO-Fasern in Mineralwolle möglich ist, wenn Temperatur und Drehbewegungen auf die Mineralwolle einwirken, während die Mineralwolle gleichzeitig mit Wasserglas versetzt wird.

Durch bevorzugte Steuerung dieser Parameter kann im Zusammenspiel mit der erfindungsgemäßen Molarität des Wasserglases eine vollständige Zerkleinerung der Mineralwollfasern zu einer pulverförmigen Struktur, wie sie beispielsweise in der in dem Journal of Material Cycles and Waste Management (2018) 20:1248-1256 beschriebenen Studie unter Anwendung von statischem Druck, vermieden werden und es resultiert eine Faserstruktur der Mineralwolle, die für Menschen im Wesentlichen unschädlich ist. Dieses wird dadurch erreicht, dass sich die schädlichen WHO-Fasern an die Größe an unschädlicheren Fasern anaglomerieren und somit quasi gebunden werden.

Damit unterscheidet sich das erfindungsgemäße Verfahren im Wesentlichen von anderen Entsorgungsverfahren von Faser-enthaltenden Rückständen, bei welchen es zu einer vollständigen Pulverisierung der Fasern der Mineralwolle kommt.

Das erfindungsgemäße Verfahren wird vorzugsweise in einem geschlossenen Bearbeitungsraum für die Mineralwollfasern durchgeführt. Die Verwendung von einem geschlossenen Bearbeitungsraum führt zu dem Vorteil, dass durch diese Maßnahme verhältnismäßig einfach ein gewünschter Druckbereich realisiert werden kann, mit welchem die Fasern während der Umsetzung mit dem Wasserglas beaufschlagt werden, und andererseits verhindert ein geschlossener Bearbeitungsraum, in welchen die Mineralwollfasern bearbeitet werden, deren unerwünschte Freisetzung. Somit wird eine Exposition der Mineralwollfasern gegenüber den Verfahrensanwendern vermieden.

Das erfindungsgemäße Verfahren wird vorzugsweise so durchgeführt, dass in einem kontinuierlichen Verfahren die Mineralwollfasern mit dem Wasserglas versetzt werden, die gewünschte Temperatur eingestellt wird und die Mischung aus Faser-enthaltendem Material und Wasserglas einem Druck und einer Krafteinwirkung durch die oben beschriebene Drehbewegung ausgesetzt werden. Die verwendeten Temperaturen und Drehbewegungen führen in Kombination mit der verwendeten Molarität des Wasserglases zu dem erfindungsgemäßen Zweck.

In einer ersten Ausführungsform des erfindungsgemäßen Verfahrens wirken Temperatur und mechanische Kraft aufgrund der Drehbewegungen zeitgleich auf die Mineralwolle ein.

In einer zweiten Ausführungsform des erfindungsgemäßen Verfahrens wirken Temperatur und mechanische Kraft aufgrund der Drehbewegung nacheinander auf die Mineralwolle ein.

Im Rahmen der vorliegenden Erfindung wird der Verfahrensschritt (ii) im Allgemeinen für einen Zeitraum von mindestens 5 Minuten, insbesondere mindestens 10 Minuten, insbesondere mindestens 15 Minuten, insbesondere mindestens 20 Minuten, insbesondere mindestens 25 Minuten, insbesondere mindestens 30 Minuten, insbesondere mindestens 35 Minuten, insbesondere mindestens 40 Minuten, insbesondere mindestens 45 Minuten, insbesondere mindestens 50 Minuten, insbesondere mindestens 55 Minuten, insbesondere mindestens 60 Minuten, insbesondere mindestens 70 Minuten, insbesondere mindestens 80 Minuten, insbesondere mindestens 90 Minuten, durchgeführt.

Im Rahmen der vorliegenden Erfindung wird der Verfahrensschritt (ii) im Allgemeinen für einen Zeitraum von höchstens 120 Minuten, insbesondere höchstens 115 Minuten, insbesondere höchstens 110 Minuten, insbesondere höchstens 105 Minuten, insbesondere höchstens 100 Minuten, insbesondere höchstens 95 Minuten, insbesondere höchstens 90 Minuten, insbesondere höchstens 85 Minuten, insbesondere höchstens 80 Minuten, insbesondere höchstens 75 Minuten, insbesondere höchstens 70 Minuten, insbesondere höchstens 65 Minuten, insbesondere höchstens 60 Minuten, insbesondere höchstens 55 Minuten, insbesondere höchstens 50 Minuten, insbesondere höchstens 45 Minuten, insbesondere höchstens 40 Minuten, insbesondere höchstens 35 Minuten, insbesondere höchstens 30 Minuten, durchgeführt.

Im Rahmen der vorliegenden Erfindung ist die erste Ausführungsform der zeitgleichen Krafteinwirkung bevorzugt.

Für das erfindungsgemäße Verfahren ist es von Vorteil, wenn die auf das Faser-enthaltende Material einwirkende Temperatur und mechanische Kraft aufgrund der Drehbewegung kontinuierlich überwacht werden.

Sollten im Rahmen der vorliegenden Erfindung beispielsweise Verbundstoffe, enthaltend Fasern von Mineralwolle, aufgearbeitet werden, kann die Mineralwolle, in Abhängigkeit der geplanten weiteren Verwendung, zunächst von der Bewehrung, bei welcher es sich beispielsweise um eine Kaschierung aus Papier oder einer Aluminiumfolie oder um eine Drahtbewehrung handeln kann, befreit werden. In solch einem Fall bietet es sich an, die Fasern der Mineralwolle zunächst einmal einer ersten Vorstufe der Zerkleinerung zu unterwerfen. In dieser Vorstufe wird der Faserstoff vorzerkleinert, von seiner Bewehrung befreit und bezüglich weiterer Fremdbestandteile aufgeschlossen. Eine Befreiung der Mineralwolle von entsprechenden Bewehrungen ist insbesondere dann von Vorteil, wenn die aufgearbeiteten Fasern der Mineralwolle wieder erneut verwendet werden sollen. Bei einer abschließenden Entsorgung der aufgearbeiteten Fasern der Mineralwolle ist es nicht zwingend erforderlich, Bewehrungen aus dem Ausgangsmaterial vor Zerkleinerung zu entfernen.

Das erfindungsgemäße Verfahren kann darüber hinaus vorzugsweise in einer mobilen Vorrichtung realisiert werden. Der Vorteil der Erfindung bestehen dann darin, dass die Fasern der Mineralwolle beispielsweise direkt aus dem Abriss von Industrieanlagen ohne weitere Vorbehandlung verarbeitet werden können.

Dar durch das erfindungsgemäße Verfahren erhältliche Fasermaterial kann entweder entsorgt oder für einen neuen Anwendungszweck verwendet werden.

Das erfindungsgemäße Verfahren kann in einer beliebigen Vorrichtung durchgeführt werden, solang die Vorrichtung in der Lage ist, entweder gleichzeitig oder sukzessive die vorstehend genannten Temperaturen und Drehkräfte auf die Mineralwolle auszuüben.

Im Rahmen der vorliegenden Erfindung kann die aufzuarbeitende Mineralwolle, die beispielsweise unvorbehandelt in Form von Bahnen vorliegt und Kaschierungen aus Papier oder Aluminiumfolie und/oder Drahtgewebe enthalten kann, im Allgemeinen zunächst in einer ersten Vorrichtung von der Kaschierung oder Bewehrung befreit werden. Dieses kann beispielsweise in einer Schneidmühle erfolgen, in der auch eine Vorzerkleinerung, verbunden mit einem Aufschluss bezüglich der Kaschierung mit Papier, Alufolie und Draht, stattfindet. Bei der Zerkleinerung der Fasern der Mineralwolle entsteht ein feinflockiges Produkt. Durch die Vorzerkleinerung in dieser ersten Vorrichtung, die beispielsweise als Schneidmühle ausgebildet ist, wird etwa eine Vergrößerung des Ausgangsschüttgewichtes der in die erste Vorrichtung eingegebenen Fasern der Mineralwolle bewirkt.

Die so optional vorbehandelten Fasern der Mineralwolle werden aus dieser ersten Vorrichtung ausgetragen und können dann - ebenfalls optional beispielsweise über ein Förderband einer Vorrichtung zugeführt werden, in welchen die oben beschriebenen Verfahrensschritte (i) und (ii) durchgeführt werden.

Vor der Durchführung der oben beschriebenen Verfahrensschritte (i) und (ii) können gegebenenfalls so aufbereiteten Fasern von ferromagnetischen Fremdbestandteilen, wie zerkleinerten Drahtstücken oder Rost durch einen Magneten befreit werden.

Nach dieser weiteren optionalen Abtrennung der ferromagnetischen Bestandteile erfolgt dann die eigentliche Bearbeitung der Fasern der Mineralwolle im Sinne der vorliegenden Erfindung, in welchem die Fasern der Mineralwolle unter Einwirkung von Temperatur und/oder Drehbewegung unter der Verwendung von Wasserglas umgewandelt werden.

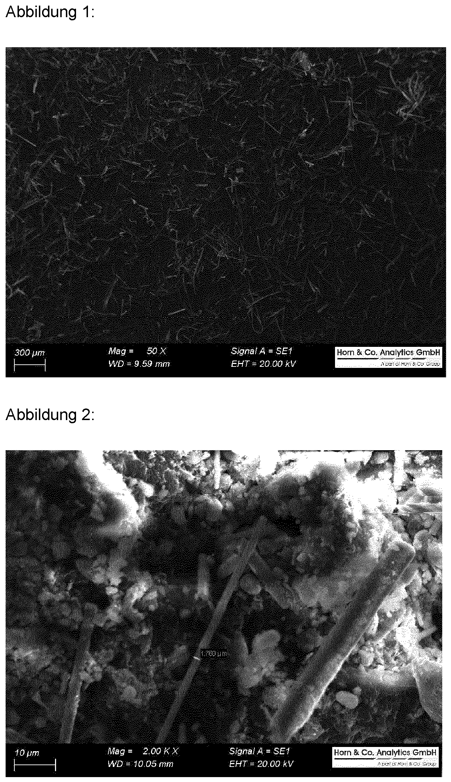

Die vorliegende Erfindung wird anhand des Fließdiagramms der Abbildung 1 näher erläutert:
Demgemäß umfasst das erfindungsgemäße Verfahren zunächst den Verfahrensschritt 1, in welchem ein üblicherweise verpackter Mineralwollfaserabfall in eine erfindungsgemäße Vorrichtung aufgegeben wird. Im Nachgang wird der Mineralwollfaserabfall über ein Förderband in einem Verfahrensschritt 2 in einen Zerkleinerer überführt, in welchem in dem Verfahrensschritt 3 eine Vorzerkleinerung des Mineralwollfaserabfalls erfolgt. Der Austrag der Vorzerkleinerung wird dann in einem Verfahrensschritt 4 über einen Trogkettenförderer in den Verfahrensschritt 5 der Feinzerkleinerung überführt, die üblicherweise unter Einwirkung von Duck erfolgt. In einem Verfahrensschritt 6 wird parallel zu den Verfahrensschritten 1 bis 5 in einem Chemikalienbehälter das Wasserglas bereitgestellt. Das Wasserglas wird im Verfahrensschritt 7 über eine Dosierpumpe parallel zu dem feinzerkleinerten Mineralwollfaserabfall in einem Verfahrensschritt 8 in einen oder mehreren Reaktoren miteinander in Kontakt gebracht und anschließend in einem Verfahrensschritt 9 aus der erfindungsgemäßen Vorrichtung ausgeschleust.

Die vorliegende Erfindung wird anhand des nachfolgenden Ausführungsbeispiels näher erläutert.

### Ausführungsbeispiel:

Eine Mineralwollfaserabfall, der WHO-Fasern umfasst, wird als zu behandelndes Ausgangsmaterial bereitgestellt. In der Abbildung 1 sind WHO-Fasern in dem Ausgangsmaterial erkennbar.

Das Ausgangsmaterial wird in einem wässrigen Medium aufgenommen und mit einem Natriumwasserglas mit einem molaren Modul SiO₂/Na₂O (Molarität) von weniger als 3,35 für einen Zeitraum von 5 Minuten bis 120 Minuten bei einer Temperatur von 30 bis 200 °C unter Rühren behandelt.

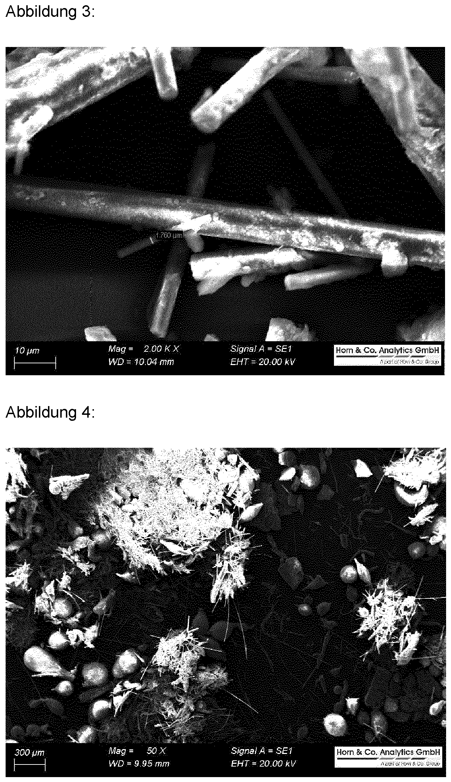

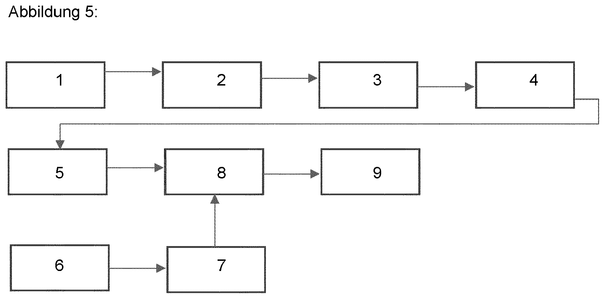

Die Abbildung 2 zeigt die Verbindung der einzelnen Fasern, während Abbildung 3 eine WHO-Faser (1,760 µm), welche an einer großen Faser "klebt" zeigt. Abbildung 4 zeigt schließlich ein ganzes "Faserknäuel" durch gebundene Fasern.

Die Untersuchung sowie die Aufnahme der Bilder in den Abbildungen 1 bis 4 sind mit einem Rasterelektronenmikroskop Typ: EVO 15 der Fa. Carl Zeiss Microscopy GmbH durchgeführt worden. Die Auflösung der Bilder beträgt 1024 x 768 Pixel.

Die Proben wurden in den Versuchen nicht besonders behandelt. Wenn es möglich war, wurde das Fasermaterial wie bei einer Kontaktprobe nach der VDI 3877/Blatt 1 präpariert. Dazu wird das Probennahmemedium mit der haftenden Seite auf die zu beprobende Stelle gedrückt und von dieser vorsichtig wieder abgenommen. Da bei einigen Proben die Fasern jedoch auf dem Medium nicht haften blieben, wurde nach der VDI 3866/Blatt 5 ein Zielpräparat hergestellt. Dazu werden sichtbare Fasern direkt auf den REM-Probenträger extrahiert. Nach dem Anfertigen der Präparate werden diese noch für 45 Sekunden bei 25 mA mit Gold besputtert, um den Kontrast in den Proben zu erhöhen.

Der Anteil an WHO-Fasern in der Ausgangsprobe lag bei ca. 50-55 %.

## Patentansprüche

1. Verfahren zur Zerstörung von Faser-enthaltenden Rückständen, welches durch die nachfolgenden Verfahrensschritte gekennzeichnet ist:
(i) Bereitstellung von einem Faser-enthaltenden Material, welches WHO-Fasern mit einem Aspektverhältnis von Länge zu Durchmesser von mehr als 3 : 1 enthält; und
(ii) Umsetzung des aus Verfahrensschritt (i) resultierenden Faser-enthaltenden Materials mit einem Wasserglas,
**dadurch gekennzeichnet, dass** das molare Modul SiO₂/M₂O des Wasserglases (Molarität) vorzugsweise kleiner als 3,35 ist, wobei M₂O die Gesamtmenge an Oxiden von Alkalimetallen M bezeichnet.

2. Verfahren nach Anspruch 1, **dadurch gekennzeichnet, dass** das Verfahren zum Unschädlichmachen von WHO-Fasern in Faser-enthaltenden Rückständen dient.

3. Verfahren nach Anspruch 1 oder 2, **dadurch gekennzeichnet, dass** die Molarität von SiO₂ zu M₂O in dem verwendeten Wasserglas weniger als 3,30 beträgt.

4. Verfahren nach einem der Ansprüche 1 bis 3, **dadurch gekennzeichnet, dass** der Verfahrensschritt (ii) bei einer Temperatur oberhalb von 30 °C durchgeführt wird.

5. Verfahren nach einem der Ansprüche 1 bis 4, **dadurch gekennzeichnet, dass** der Verfahrensschritt (ii) bei einer Temperatur unterhalb von 200 °C durchgeführt wird.

6. Verfahren nach einem der Ansprüche 1 bis 5, **dadurch gekennzeichnet, dass** das Faser-enthaltenden Material mit dem Wasserglas einer Drehbewegung ausgesetzt wird.

7. Verfahren nach Anspruch 6, **dadurch gekennzeichnet, dass** die Drehbewegung für einen Zeitraum von 5 Minuten bis 120 Minuten durchgeführt wird.

8. Verfahren nach einem der Ansprüche 1 bis 6, **dadurch gekennzeichnet, dass** das Wasserglas ausgewählt wird aus der Gruppe, bestehend aus Natrium-, Kalium-, Lithiumwasserglas und beliebigen Mischungen.

9. Verfahren nach einem der Ansprüche 1 bis 7, **dadurch gekennzeichnet, dass** das Wasserglas ein Natriumwasserglas ist.

10. Verfahren nach einem der Ansprüche 1 bis 8, **dadurch gekennzeichnet, dass** das Verfahren so lange durchgeführt wird, bis die WHO-Fasern nach ihrer Behandlung einen Durchmesser von mehr als 3 µm aufweisen oder die WHO-Fasern nach ihrer Behandlung eine Länge von weniger als 5 µm aufweisen oder die WHO-Fasern nach ihrer Behandlung gleichzeitig einen Durchmesser von mehr als 3 µm und eine Länge von weniger als 5 µm aufweisen.

11. Verfahren nach einem der Ansprüche 1 bis 9, **dadurch gekennzeichnet, dass** der Verfahrensschritt für einen Zeitraum von 5 Minuten bis 120 Minuten durchgeführt wird.

12. Verfahren nach einem der Ansprüche 1 bis 11, **dadurch gekennzeichnet, dass** das Verfahren so lange durchgeführt wird, bis sich die WHO-Fasern an Fasern, die nicht der WHO-Definition entsprechen, anagglomeriert habe,

13. Verfahren nach einem der Ansprüche 1 bis 12, **dadurch gekennzeichnet, dass** die Temperatur in dem Reaktionsschritt (ii) und die Molarität des Wasserglases in dem Verfahrensschritt (ii) während des im Wesentlichen gesamten Verfahrens überwacht wird.

## Claims

1. Process for the destruction of fibre-containing residues, which is **characterized by** the following process steps:
(i) providing a fiber-containing material comprising WHO fibers having a length to diameter aspect ratio of greater than 3:1; and
(ii) reacting the fiber-containing material resulting from process step (i) with a water glass,
**characterized in that** the molar modulus SiO₂/M₂O of the water glass (molarity) is preferably less than 3.35, wherein M₂O denotes the total amount of oxides of alkali metals M.

2. Process according to claim 1, **characterized in that** the process serves to render WHO fibres in fibre-containing residues harmless.

3. Process according to claim 1 or 2, **characterized in that** the molarity of SiO₂ to M₂O in the water glass used is less than 3.30.

4. Process according to one of claims 1 to 3, **characterized in that** process step (ii) is carried out at a temperature above 30 °C.

5. Process according to one of claims 1 to 4, **characterized in that** process step (ii) is carried out at a temperature below 200 °C.

6. Process according to one of claims 1 to 5, **characterized in that** the fibre-containing material is subjected to a rotary movement with the water glass.

7. Method according to claim 6, **characterized in that** the rotating movement is carried out for a period of 5 minutes to 120 minutes.

8. Process according to any one of claims 1 to 6, **characterized in that** the water glass is selected from the group consisting of sodium, potassium, lithium water glass and any mixtures thereof.

9. Process according to any one of claims 1 to 7, **characterized in that** the water glass is a sodium water glass.

10. Process according to one of claims 1 to 8, **characterized in that** the process is carried out until the WHO fibres have a diameter of more than 3 µm after their treatment or the WHO fibres have a length of less than 5 µm after their treatment or the WHO fibres have a diameter of more than 3 µm and a length of less than 5 µm at the same time after their treatment.

11. Process according to one of claims 1 to 9, **characterized in that** the process step is carried out for a period of 5 minutes to 120 minutes.

12. Process according to one of claims 1 to 11, **characterized in that** the process is carried out until the WHO fibres have agglomerated to result in fibres which do not correspond to the WHO definition.

13. Process according to any one of claims 1 to 12, **characterized in that** the temperature in the reaction step (ii) and the molarity of the water glass in the process step (ii) are monitored during substantially the entire process.

## Revendications

1. Procédé de destruction de résidus contenant des fibres, **caractérisé par** les étapes de procédé suivantes :
(i) fournir un matériau contenant des fibres qui contient des fibres OMS ayant un rapport d'aspect de la longueur au diamètre supérieur à 3 :1 ; et
(ii) faire réagir le matériau contenant des fibres résultant de l'étape (i) avec un verre soluble,
**caractérisé en ce que** le module molaire SiO₂/M₂O du verre soluble (molarité) est de préférence inférieur à 3,35, dans lequel M₂O désigne la quantité totale d'oxydes de métaux alcalins M.

2. Procédé selon la revendication 1, **caractérisé en ce que** le procédé sert à rendre inoffensives les fibres OMS dans les résidus contenant des fibres.

3. Procédé selon la revendication 1 ou 2, **caractérisé en ce que** la molarité de SiO₂ par rapport à M₂O dans le verre soluble utilisé est inférieure à 3,30.

4. Procédé selon l'une des revendications 1 à 3, **caractérisé en ce que** l'étape de procédé (ii) est effectuée à une température supérieure à 30°C.

5. Procédé selon l'une des revendications 1 à 4, **caractérisé en ce que** l'étape de procédé (ii) est effectuée à une température inférieure à 200°C.

6. Procédé selon l'une des revendications 1 à 5, **caractérisé en ce que** le matériau contenant des fibres est soumis à un mouvement de rotation avec le verre soluble.

7. Procédé selon la revendication 6, **caractérisé en ce que** le mouvement de rotation est effectué pendant une période de temps de 5 minutes à 120 minutes.

8. Procédé selon l'une quelconque des revendications 1 à 6, **caractérisé en ce que** le verre soluble est choisi dans le groupe constitué du verre soluble au sodium, au potassium, au lithium et des mélanges quelconques.

9. Procédé selon l'une des revendications 1 à 7, **caractérisé en ce que** le verre soluble est un verre soluble au sodium.

10. Procédé selon l'une des revendications 1 à 8, **caractérisé en ce que** le procédé est effectué jusqu'à ce que les fibres OMS présentent, après leur traitement, un diamètre supérieur à 3 µm ou que les fibres OMS présentent, après leur traitement, une longueur inférieure à 5 µm ou que les fibres OMS présentent, après leur traitement, simultanément un diamètre supérieur à 3 µm et une longueur inférieure à 5 µm.

11. Procédé selon l'une des revendications 1 à 9, **caractérisé en ce que** l'étape de procédé est effectuée pendant une période de temps de 5 minutes à 120 minutes.

12. Procédé selon l'une des revendications 1 à 11, **caractérisé en ce que** le procédé est effectuée jusqu'à ce que les fibres OMS se sont agglomérés à des fibres ne répondant pas à la définition OMS.

13. Procédé selon l'une des revendications 1 à 12, **caractérisé en ce que** la température dans l'étape de réaction (ii) et la molarité du verre soluble dans l'étape de procédé (ii) sont surveillées pendant sensiblement tout le procédé.
